(19) Europäisches Patentamt
European Patent Office
Office européen des brevets

(11) Publication number: 0 172 939 A1

# (12) EUROPEAN PATENT APPLICATION

(21) Application number: 84113895.1

(22) Date of filing: 16.11.84

(51) Int. Cl.4: C 09 D 9/00

(30) Priority: 18.11.83 US 553337

(43) Date of publication of application: 05.03.86 Bulletin 86/10

(84) Designated Contracting States: AT BE DE FR GB IT NL SE

(71) Applicant: AMCHEM PRODUCTS, INC., 300 Brookside Avenue, Ambler Pennsylvania 19002 (US)

(72) Inventor: Carandang, Carmen M., 129 Caroline Drive Box 50, Oaks, Penns. 19456 (US)
Inventor: Koch, Robert W., 3130 Middle School Drive, Morristown, Penns. 19401 (US)

(74) Representative: von Kreisler, Alek, Dipl.-Chem. et al, Deichmannhaus am Hauptbahnhof, D-5000 Köln 1 (DE)

## (54) Paint stripper compositions.

(57) An aqueous alkaline composition having increased effectiveness and bath life when used at elevated temperatures to remove siccative coatings from substrates containing as essential ingredients an alkali hydroxide; at least 2 of the following 3 materials: tetrahydrofurfuryl alcohol, ethoxylated furfuryl alcohol and ethoxylated tetrahydrofurfuryl alcohol; and one or more alkanolamines.

EP 0 172 939 A1

## PAINT STRIPPER COMPOSITIONS

This invention relates to stripper compositions for removing siccative coatings. It particularly relates to stable, non-volatile aqueous alkaline stripping compositions for removing siccative coatings such as paint, shellac, varnish, lacquer and the like from wood and metal substrates.

## BACKGROUND OF THE INVENTION

Compositions which are effective in removing siccative coatings from a wide variety of substrates, including wood and metals, are known. They find utility in such diverse operations as furniture stripping and similar applications which may be characterized as home restoration operations, as well as in industrial applications, such as in the automotive industry, when it becomes necessary to remove protective siccative coatings from the component metallic parts.

The simplest of the stripping compositions comprises an aqueous alkaline solution which is usually employed at high temperatures (usually a rolling boil). This is a relatively slow process in which the alkaline base is consumed and contaminants are formed in the composition.

An improvement over the use of simple solutions of alkaline bases at higher temperatures has been obtained by adding to the alkaline solution a wetting agent which accelerates the stripping operation by penetrating or permeating the paint films. Additional improvements can be realized by the use of detergents and emulsifiers which further accelerate the stripping process.

Although the aforementioned aqueous alkaline compositions, which contain wetting agents, detergents and emulsifiers and are employed at elevated temperatures and are often characterized as "hot stripper compositions", are generally effective in removing most siccative finishes, they are ineffective in removing cathodic electrodeposition paints and are not particularly effective in removing certain paints such as acrylic and vinyl paints.

It has previously been found that the addition of furfuryl alcohol, tetrahydrofurfuryl alcohol, mixtures of said alcohols, and alkoxylated furfuryl alcohol to such hot stripper compositions results in compositions that are effective in removing acrylic and vinyl paints as well as cathodic electrodeposition paints.

However, problems were encountered in the use of such stripping compositions. For example, furfuryl alcohol and water form an azeotrope, the boiling point of which falls within the operative temperature range for the hot stripper compositions. Thus, with continued use, the activator, i.e. the furfuryl alcohol, is lost as it is boiled off, thus requiring either the preparation of a new bath or the continued replacement of the furfuryl alcohol and water.

It has been found that the addition of at least two of the following materials: tetrahydrofurfuryl alcohol and ethoxylated materials of the formula

$$R\text{-}O(CH_2CH_2O)_nH$$

wherein R is a furfuryl or tetrahydrofurfuryl radical and n has a value from about 0.5 to 10, to an aqueous alkaline stripping bath will provide compositions having increased

stripping effectiveness and prolonged bath life when used at elevated temperatures. Preferably, such compositions contain a sequestering agent to tie up magnesium and calcium ions present in hard water, one or more surfactants or wetting agents, and a composition stabilizing agent.

Representative of sequestering agents which can be employed in these compositions are hydroxy-carboxylic acids such as gluconic, citric, and tartaric acids, aminopolycarboxylic acids such as ethylene-diaminetetraacetic acid, and various commercial preparations such as Belzak AC, sodium alpha-glucoheptonate dihydrate.

The particular surfactant or wetting agent employed was not critical and amphoteric, nonionic and/or anionic surfactants were employed. Preferred surfactants were Miranol JEM concentrate, manufactured by Miranol Chemical Co. and Sulfonate OA-5, manufactured by Cities Service Co.

Additional benefits were realized by the use of a composition-stabilizing compound which may be regarded as a secondary solvent miscible with water and functions to provide a more stable solution or emulsion which did not separate on standing. Preferred composition-stabilizing compounds included methanol, monoethanolamine, diethylene glycol, propylene glycol, dipropylene glycol, n-butylamine and mixtures thereof.

In the actual practice of using these improved activating compositions, aqueous solutions of the activating compositions were first prepared, and when needed such activating compositions were added to an alkaline solution having a pH of about 9.5 to about 14+. Suitable bases for preparaing these alkaline solutions were the alkaline hydroxides with

sodium hydroxide being preferred because of its low cost compared to the others.

Examples of these improved activating compositions and their uses are described in U.S. Patent No. 4,366,002, (the '002 patent) and the information disclosed in this patent is incorporated herein by reference.

The compositions described in the '002 patent have eliminated the azeotrope problem inherent in the use of furfuryl alcohol and are effective in the stripping of alkyd, acrylic and cathodic electrodeposited paints. However, these compositions do not retain their activity as long as desired since the activator composition degrades at the elevated temperatures at which the stripping takes place. This requires either the replenishment of the activating composition in the alkaline stripper or the discarding of the entire stripper composition and the preparation of a new batch.

DESCRIPTION OF THE INVENTION

This invention provides an activating composition to be added to an alkaline stripping solution, which activating composition will not be degraded and will retain its full activity after weeks of continued use under the conditions of hot stripping siccative coatings.

In accordance with the present invention there is provided an aqueous activating composition to be added to an aqueous alkaline solution for the removal of siccative coatings at elevated temperatures. This activating composition contains effective amounts of the following essential ingredients:

(a) from about 0.1 to about 20%, preferably from about 4 to about 8% by weight, based on the

weight of the composition, of N-phenyl-diethanolamine, diisopropylamine, triisopropylamine, a mixture of di- and tri-isopropanolamines, or mixtures of any or all of the foregoing; and

(b) from about 0.1 to about 20 %, preferably from about 1 to about 8 % by weight, based on the weight of the composition, of at least two heterocyclic alcohols selected from the following: tetrahydrofurfuryl alcohol; an ethoxylated compound of the formula

$$RO(CH_2CH_2O)_nH$$

wherein R is furfuryl and n is about 0.5 to about 10, preferably about 0.5 to about 1.5, and more preferably about 0.85 to about 1.08; and an ethoxylated compound of the formula

$$R'O(CH_2CH_2O)_nH$$

wherein R' is tetrahydrofurfuryl and n is about 0.5 to about 10. Preferably a mixture of all three of the above heterocyclic alcohols are used herein.

Preferably component (a) above is a mixture of di-isopropanolamine, and tri-isopropanolamine. A preferred ratio of the di- and tri-isopropanolamines is from about 76% to about 98 % by weight of di-isopropanolamine and from about 0.5% to about 12% by weight of tri-isopropanolamine.

A preferred activating composition contains in percent by weight:

(i) from about 0.1 to about 10% of N-phenyl-diethanolamine;

(ii) from about 0.1 to about 10% of a mixture of di- and tri-isopropanolamines;

(iii) from about 0.1 to about 10% of tetrahydrofurfuryl alcohol;

(iv) from about 0.1 to about 20% of a compound of the formula $RO(CH_2CH_2O)_nH$ wherein R is furfuryl and n is about 0.85 to about 1.08; and

(v) from about 0.1 to about 20% of a compound of the formula $R'O(CH_2CH_2O)_nH$ wherein R' is tetrahydrofurfuryl and n is about 3 to about 8.

In addition to the essential ingredients (a) and (b) described above, the aqueous activating compositions of the invention can contain sequestering agents, surfactants, stabilizing agents, and/or coupling agents. Suitable sequestering agents, surfactants and stabilizing agents are described above in connection with the disclosure in the '002 patent and, as noted before, the disclosure in this patent is incorporated herein by reference. A suitable coupling agent is butyl carbitol.

With respect to the above optional ingredients, the aqueous activating compositions can contain them in the following quantities:

(c) from about 0.1 to about 20% by weight of a sequestering agent;

(d) from about 0.1 to about 10% by weight of a coupling agent;

(e) from about 0.1 to about 10% by weight of a surfactant; and

(f) from about 0.1 to about 10% by weight of a stabilizer.

A preferred sequestering agent is Belzac AC (Glucoquest AC), sodium alpha-glucoheptonate dihydrate. A preferred

surfactant is Miranol JEM (sodium salt of dicarboxylic octoic derivative). A preferred stabilizing agent is tetraethylene glycol.

The invention will become clearer from the examples which follow. These examples are given by way of illustration and are not to be considered as limiting.

EXAMPLE 1

| Material | % by weight |
|---|---|
| Water | 60.00 |
| Butyl carbitol | 6.00 |
| N-phenyl-diethanolamine | 4.00 |
| Mixture of di- and tri-isopropanolamine | 5.00 |
| Glucoquest AC | 5.00 |
| $RO(CH_2CH_2O)_nH$<br>R is furfuryl, n is about 0.85 to about 1.08 | 8.00 |
| $R'O(CH_2CH_2O)_nH$<br>R'is tetrahydrofurfuryl, n is about 3 to about 8 | 3.00 |
| Tetrahydrofurfuryl alcohol | 3.00 |
| Miranol JEM Conc. | 1.00 |
| Tetraethylene glycol | 5.00 |

The water is heated to about 120°-130°F and the materials are added with stirring in the order listed. The stirring is continued until the solution is clear. After the solution has cooled to below 90°F, it is then placed in drums or other containers.

Following the procedure of EXAMPLE 1, the following compositions were prepared. In these examples the numerical values refer to percent by weight.

| Material | Examples 2 | 3 | 4 | 5 |
|---|---|---|---|---|
| Water | 50 | 65 | 45 | 55 |
| Butyl carbitol | 6 | 5 | 6 | 4 |
| N-phenyl-diethanolamine | 6 | 4 | 7 | 5 |
| Mixture of di- and tri-isopropanol-amines | 6 | 4 | 7 | 6 |
| Glucoquest AC | 6 | 4 | 5 | 4 |
| $RO(CH_2CH_2O)_nH$ where R is furfuryl and n is about 0.85 to about 1.08 | 10 | 7 | 12 | 10 |
| $R'O(CH_2CH_2O)_nH$ where R' is tetrahydrofurfuryl and n is about 3 to about 8 | 5 | 3 | 6 | 5 |
| Tetrahydrofurfuryl alcohol | 5 | 3 | 5 | 4 |
| Miranol JEM Conc. | 1 | 1 | 2 | 2 |
| Tetraethylene glycol | 6 | 4 | 5 | 5 |

In using the aqueous activating compositions of this invention, about 2 to about 5 volumes of the activating compositions were added to about 10 volumes of an aqueous alkaline solution having a pH of about 9.5 to about 14+ and containing about 10 to about 50% by weight, the higher percentages around 50 being preferred, of an alkali hydroxide. Suitable alkali hydroxides are sodium hydroxide, potassium hydroxide and mixtures thereof. While other alkali hydroxides may be used they are too expensive for heavy commercial use.

The aqueous alkaline activated stripping compositions are very effective, the compositions containing more activating composition being more effective; i.e. causing more rapid stripping. The times needed to effect 100% stripping at 200°F with different v/v percentages of the activating composition of EXAMPLE 1 and a 50% sodium hydroxide solution are as follows:

| v/v Concentration | 100% Stripping Time |
|---|---|
| 0% | 25 min. |
| 5% | 10.5 min. |
| 10% | 5.5 min. |
| 20% | 2.5 min. |

Activating products now on the market require about 4 to 5 times as long to effect 100% stripping under similar conditions.

The aqueous alkaline activated stripping compositions retain their activity during use for significantly longer periods of time than those currently on the market.

What is claimed is:

1. An aqueous activating composition to be added to an aqueous alkaline solution for the removal of siccative coatings at elevated temperatures, containing as essential ingredients:

   (a) an alkanolamine selected from the group consisting of N-phenyl-diethanolamine, di-isopropanolamine, tri-isopropanolamine, a mixture of di- and tri-isopropanolamines, and mixtures of any or all of the foregoing; and

   (b) at least two heterocyclic alcohols selected from the group consisting of

      (i) tetrahydrofurfuryl alcohol,

      (ii) an ethoxylated alcohol of the formula

      $$RO(CH_2CH_2O)_nH$$

      wherein R is furfuryl and n is about 0.5 to about 10, and

      (iii) an ethoxylated alcohol of the formula

      $$R'O(CH_2CH_2O)_nH$$

      wherein R' is tetrahydrofurfuryl and n is about 0.5 to about 10;

   said ingredients being present in amounts effective to activate the aqueous alkaline solution to remove the siccative coating from a substrate coated therewith.

2. An activating composition according to Claim 1 wherein n in the formula in (b)(ii) is about 0.5 to about 1.5, preferably about 0.85 to about 1.08.

3. An activating composition according to Claims 1 or 2, wherein n in the formula in (b)(iii) is about 3 to about 8.

4. An activating composition according to Claims 1 - 3 wherein component (b) is a mixture of (i), (ii) wherein n is about 0.85 to 1.08, and (iii) wherein n is about 3 to about 8.

5. An activating composition according to Claims 1 - 4, wherein the alkanolamine is a mixture of N-phenyl-di-ethanolamine, di-isopropanolamine, and tri-isopropanolamine.

6. An activating composition according to Claims 1 - 5 wherein the proportion of di-isopropanolamine to tri-isopropanolamine is about 76% to about 98 % by weight of di-isopropanolamine and from about 0.5 % to about 12% of tri-isopropanolamine.

7. An activating composition according to Claims 1 - 6 which contains

A) about 0.1 to about 10% by weight of N-phenyl-di-ethanolamine;

B) about 0.1 to about 10% by weight of a mixture of di- and tri-isopropanolamines;

C) about 0.1 to about 20% by weight of a compound of the formula $RO(CH_2CH_2O)_nH$ wherein R is furfuryl and n is about 0.85 to about 1.08; and

D) about 0.1 to about 20% by weight of a compound of the formula $R'O(CH_2CH_2O)_nH$ wherein R' is tetrahydrofurfuryl and n is about 3 to about 8.

8. An activating composition according to Claims 1 - 7 which contains additionally at least one of the following additives:
about 0.1 to about 20 % by weight of a sequestering agent, preferably sodium alpha-glucoheptonate dihydrate;
about 0,1 to about 10 % by weight of a coupling agent, preferably butyl carbitol;
about 0.1 to about 10 % by weight of a surfactant, preferably Miranol JEM, and
about 0.1 to about 10 % by weight of a stabilizer, preferably tetraethylene glycol.

9. An activating composition according to Claims 1 - 8 which consists essentially of, in approximate percent by weight:

| | |
|---|---|
| Water | 60 |
| Butyl carbitol | 6 |
| N-phenyl-diethanolamine | 4 |
| Mixture of di- and tri-isopropanolamines | 5 |
| Sodium alpha-glucoheptonate | 5 |
| Compound of the formula $RO(CH_2CH_2O)_nH$ wherein R is furfuryl and n is about 0.85 to about 1.08 | 8 |
| A compound of the formula $R'O(CH_2CH_2O)_nH$ wherein R' is tetrahydrofurfuryl and n is about 3 to about 8 | 3 |
| Tetrahydrofurfuryl alcohol | 3 |
| Sodium salt of dicarboxylic octoic derivative | 1 |
| Tetraethylene glycol | 5 |

10. An activated aqueous alkaline composition for removing a siccative coating from a substrate coated therewith at an elevated temperature comprising

    A. about 2 to about 5 volumes of an aqueous activating composition of claims 1 to 9,

    B. about 10 volumes of an aqueous alkaline solution containing about 10 to about 50 % by weight of an alkali hydroxide.

11. A composition according to Claim 10 wherein the alkali hydroxide is sodium hydroxide, potassium hydroxide and mixtures thereof, preferably sodium hydroxide.

12. A composition according to Claims 10 or 11 wherein the concentration of the hydroxide is about 50 %.

13. A method of removing a siccative coating from a substrate coated therewith comprising the steps of

    1) contacting said coated substrate with an effective quantity of the composition of Claims 10 - 12 at an elevated temperature until the siccative coating is removed from the coated substrate; and
    2) removing the substrate from contact with the composition.

European Patent Office

# EUROPEAN SEARCH REPORT

0172939

Application number

EP 84 11 3895

## DOCUMENTS CONSIDERED TO BE RELEVANT

| Category | Citation of document with indication, where appropriate, of relevant passages | Relevant to claim | CLASSIFICATION OF THE APPLICATION (Int Cl.4) |
|---|---|---|---|
| Y | EP-A-0 050 486 (AMCHEM PRODUCTS)<br>* Page 29, claim 1; page 32, claim 16 * | 1,10-13 | C 09 D 9/00 |
| A | * Page 30, claims 3,4 * | 2,3 | |
| D | & US-A-4 366 002<br>--- | | |
| Y | FR-A-2 213 971 (SOCIÉTÉ CONTINENTALE PARKER)<br>* Page 12, claims 1-3,5,8; page 13, claims 8,9,12,13 *<br>----- | 1,10-13 | |
| | | | TECHNICAL FIELDS SEARCHED (Int. Cl.4) |
| | | | C 09 D |

The present search report has been drawn up for all claims

| Place of search | Date of completion of the search | Examiner |
|---|---|---|
| THE HAGUE | 27-02-1985 | GIRARD |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document